# EUROPEAN PATENT APPLICATION

(11) **EP 4 235 592 A1**
(43) Date of publication of application: **30.08.2023**
(21) Application number: 23155450.2
(22) Date of filing: 07.02.2023
(51) Int. Cl.: G06V 10/25, G06V 10/778, G06V 10/82, G06V 10/98

(54) **SYSTEM AND METHOD FOR DEFECT DETECTION**

(30) Priority: 24.02.2022 US 202263313343 P; 21.04.2022 US 202217726454
(71) Applicant: Samsung Display Co., Ltd., Yongin-si, Gyeonggi-do 17113 (KR)
(72) Inventor: QU, Shuhui, 95134 San Jose (KR); CHENG, Qisen, 95134 San Jose (KR); LEE, Janghwan, 95134 San Jose (KR)
(74) Representative: Marks & Clerk LLP

(57) **Abstract**

A system and method for defect detection. In some embodiments, the method includes: identifying, by a first neural network, a suspicious area in a first image; selecting, from among a set of defect-free reference images, by a second neural network, a defect-free reference image corresponding to the first image; identifying, by a third neural network, in the defect-free reference image, a reference region corresponding to the suspicious area; and determining, by a fourth neural network, a measure of similarity between the suspicious area and the reference region.

## Description

### FIELD

One or more aspects of embodiments according to the present disclosure relate to manufacturing processes, and more particularly to a system and method for defect detection, e.g., in a manufacturing process.

### BACKGROUND

In manufacturing processes, defect detection by machine learning-based systems may be challenging, for example in circumstances in which defects are rare, which may be an obstacle to the assembling of a labeled training set for performing supervised training. Moreover, to the extent defective samples, or images of defective articles, are available, it may be more advantageous to reserve them for verification than to use them for training.

It is with respect to this general technical environment that aspects of the present disclosure are related.

### SUMMARY

According to an embodiment of the present disclosure, there is provided a method, including: identifying, by a first neural network, a suspicious area in a first image; selecting, from among a set of defect-free reference images, by a second neural network, a defect-free reference image corresponding to the first image; identifying, by a third neural network, in the selected defect-free reference image, a reference region corresponding to the suspicious area; and determining, by a fourth neural network, a measure of similarity between the suspicious area and the reference region.

In some embodiments, the first neural network is a student teacher neural network, including a student neural network and a teacher neural network.

In some embodiments, the method further includes training the teacher neural network with: a set of generic images, each labeled with a classification; and a first objective (e.g. cost) function that rewards correct classification of an image.

In some embodiments, the method further includes training the student neural network with: a set of normal images, and a second objective (e.g. cost) function that rewards similarity between latent variables of the student neural network and corresponding latent variables of the teacher neural network.

In some embodiments, the suspicious area is a region of the first image for which a measure of difference between a first set of latent variables of the student neural network and corresponding latent variables of the teacher neural network exceeds a threshold, the first set of latent variables and the corresponding latent variables of the teacher neural network corresponding to the interior of the suspicious area.

In some embodiments, the second neural network includes a convolutional neural network.

In some embodiments, the method further includes training the second neural network with: a set of generic images, each labeled with a classification; and an objective (e.g. cost) function that rewards correct classification of an image.

In some embodiments, the selecting of a defect-free reference image includes selecting the selected defect-free reference image for which a measure of the difference, between the first image and the selected defect-free reference image is least. This may comprise determining a measure of the difference between the first image and each of a set of defect-free reference images, and selecting as the selected defect-free image the defect-free reference image that has the smallest difference relative to the first image.

In some embodiments, the measure of the difference is an L2 norm of the difference between: latent features of the second neural network when input of the second neural network is the first image, and latent features of the second neural network when the input of the second neural network is a defect-free reference image.

In some embodiments, the identifying of the reference region includes generating, by the third neural network, a plurality of sets of estimated coordinates, each estimated set of coordinates defining the coordinates of two opposing corners of the reference region.

In some embodiments, the method further includes training the third neural network with: a plurality of cropped portions, each cropped portion being a portion of a normal image cropped based on a respective set of cropping coordinates; and an objective (e.g. cost) function that rewards similarity of estimated coordinates and cropping coordinates.

In some embodiments, the determining of a measure of similarity between the suspicious area and the reference region includes determining a measure of the difference between: latent features of the fourth neural network when input of the fourth neural network is the suspicious area, and latent features of the fourth neural network when the input of the fourth neural network is the reference region.

In some embodiments, the method further includes training the fourth neural network with: a set of generic images, each labeled with a classification; and an objective (e.g. cost) function that rewards correct classification of an image.

In some embodiments: the first image is an image of an article in a manufacturing flow: and the method further includes: determining that the measure of similarity indicates the presence of a defect; and removing the article from the manufacturing flow (or manufacturing process). This may comprise determining whether the measure of similarity indicates the presence of a defect and, in response to determining that the measure of similarity indicates the presence of a defect, removing the article from the manufacturing flow. This removal from the manufacturing flow (or manufacturing process) may be performed in an autonomous manner (e.g., without the participation of a human operator), e.g., by a processing circuit. The article may be removed from the manufacturing flow by issuing one or more alerts or commands to identify the article as defective. The one or more alerts or commands may be issued to a manufacturing system to instruct the manufacturing system configured implement at least a portion of the manufacturing flow to automatically remove the defective article from the manufacturing flow (e.g. by discarding the defective article).

In some embodiments, the article is a display panel.

In some embodiments, one of: the first neural network, the second neural network, the third neural network, and the fourth neural network, is the same neural network as another one of: the first neural network, the second neural network, the third neural network, and the fourth neural network.

According to an embodiment of the present disclosure, there is provided a system, including: one or more processing circuits, the one or more processing circuits being configured to: identify a suspicious area in a first image; select, from among a set of defect-free reference images, a defect-free reference image corresponding to the first image; identify, in the selected defect-free reference image, a reference region corresponding to the suspicious area; and determine a measure of similarity between the suspicious area and the reference region.

In some embodiments, the first image is an image of a display panel in a manufacturing flow.

According to an embodiment of the present disclosure, there is provided a system, including: one or more means for processing, the one or more means for processing being configured to: identify a suspicious area in a first image; select, from among a set of defect-free reference images, a defect-free reference image corresponding to the first image; identify, in the selected defect-free reference image, a reference region corresponding to the suspicious area; and determine a measure of similarity between the suspicious area and the reference region.

In some embodiments, the first image is an image of a display panel in a manufacturing flow.

At least some of the above and other features of the invention are set out in the claims.

### BRIEF DESCRIPTION OF THE DRAWINGS

These and other features and advantages of the present disclosure will be appreciated and understood with reference to the specification, claims, and appended drawings wherein:
FIG. 1 is a flow chart of a method, according to an embodiment of the present disclosure;
FIG. 2 is a schematic illustration of a student-teacher neural network, according to an embodiment of the present disclosure;
FIG. 3 is a schematic illustration of a convolutional neural network, according to an embodiment of the present disclosure;
FIG. 4 is a block diagram of a pooling layer and a regional proposal network, according to an embodiment of the present disclosure; and
FIG. 5 is a schematic drawing of a process flow, for two different product images, according to an embodiment of the present disclosure.

### DETAILED DESCRIPTION

The detailed description set forth below in connection with the appended drawings is intended as a description of embodiments of a system and method for defect detection provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

In manufacturing processes, defect detection by machine learning-based systems may be challenging, for example in circumstances in which defects are rare, which may be an obstacle to the assembling of a labeled training set for performing supervised training. In some embodiments, training of a machine learning system without the use of samples based on defective products is performed, as discussed in further detail herein.

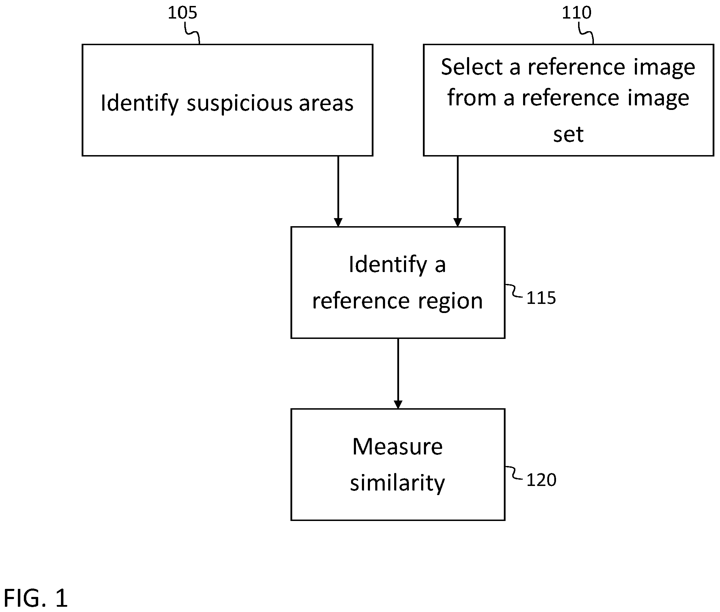

Referring to FIG. 1, in some embodiments, a method for defect-detection in an image of a product (or "product image ", e.g., a photograph of a display panel) may include, identifying, at 105, a suspicious area in an image of the product; selecting, at 110, from among a set of defect-free reference images, a defect-free reference image corresponding to the product image; identifying, at 115, in the defect-free reference image, a reference region corresponding to the suspicious area; and determining, at 120, a measure of similarity between the suspicious area and the reference region. When the measure of similarity indicates that the suspicious area and the reference region are sufficiently dissimilar (e.g., if the measure of similarity is below a threshold), the product may be deemed to be defective and removed from the manufacturing flow (e.g., to be scrapped or reworked).

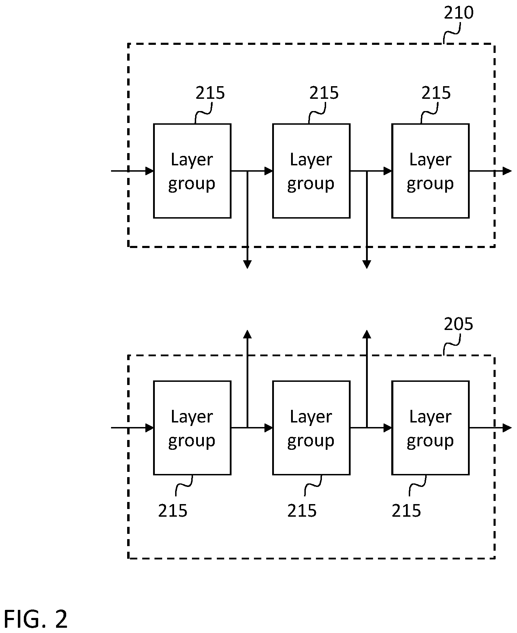

Referring to FIG. 2, the identifying of a suspicious area may be performed by a student teacher neural network, which may include a student neural network 205 and a teacher neural network 210. As used herein a "neural network" means an artificial neural network which includes a plurality of interconnected neurons. As such, a neural network may include other neural networks (as in the example of the neural network of FIG. 2, which includes the student neural network 205 and a teacher neural network 210). Each of the student neural network 205 and the teacher neural network 210 may include one or more layer groups 215, each of which may include one or more layers of artificial neurons. The outputs of the layer groups 215 that are not the final outputs of the neural networks may be referred to as "latent variables", "latent features", or "latent feature vectors" (as discussed in further detail below). The training of the student teacher neural network of FIG. 2 may proceed as follows. First, the teacher neural network 210 may be trained to perform image classification, using supervised training, with a set of images (generic images), each labeled with a respective classification. These generic images may be arbitrary everyday images, each labeled with a respective classifying label (including, for example, an image of a tree, with the label "tree", an image of a flower with the label "flower", an image of a hammer with the label "hammer", and an image of a waterfall, with the label "waterfall"). Accordingly, the generic images need not be of any particular object (e.g. need not be of a particular product). Accordingly, the generic images may be images that are not of the product or type of product being assessed. The objective function used to train the teacher neural network 210 may be one that rewards correct classification of an image. As used herein, an objective function may be a cost function or a reward function. As used herein, a cost function that "rewards" a certain outcome is one that assigns a lower cost to that outcome than to other outcomes, and that, as such, when used in training, causes the behavior of the neural network to change so that it is more likely to produce the outcome. Similarly, a reward function that "rewards" a certain outcome is one that assigns a higher reward to that outcome than to other outcomes, and that, as such, when used in training, causes the behavior of the neural network to change so that it is more likely to produce the outcome. A neural network may be trained using a suitable algorithm (e.g., backpropagation) to adjust the weights so as to optimize an objective function (e.g. a cost function or reward function) by adjusting parameters of the neural network to optimize an output of the objective function (e.g. minimize the cost or maximize the reward).

Once the teacher neural network 210 has been trained, the student neural network 205 may be trained by feeding a set of training images to the student neural network 205 and to the teacher neural network 210, each of the training images being a "normal" image (an image of a product that is, or is believed to be, free of defects). The objective function used to train the student neural network 205 in this second phase of the training of the student teacher neural network may be an objective function that rewards similarity between latent variables of the student neural network and corresponding latent variables of the teacher neural network. This similarity may be measured, for each of the training images, for example, using an L2 norm of the difference between (i) the latent feature vector of the student neural network 205 for the training image and (ii) the latent feature vector of the teacher neural network 210 for the training image. For instance, a similarity value (e.g. an L2 norm of the difference) may be calculated for each corresponding pair of latent feature vectors output (by each corresponding pair of layer groups) of the student and teacher neural networks. The objective function may be a function of reward the overall similarity (across all layer groups). The objective function may take each similarity value as an input, and/or may be based on an average, accumulation, or aggregation, of the similarity values. As described herein, an L2 (or L²) norm of a vector coordinate calculates the distance to the vector coordinate from the origin. The L2 norm may be calculated by calculating the square root of the sum of the squared vector values.

When used for inference, the student teacher neural network may be fed the product image, and each pixel of the image may be assigned, by the student teacher neural network, a likelihood value, the likelihood value being a measure of the likelihood that the pixel corresponds to the location of a defect in the product. The likelihood value may be calculated, for example, as a norm (e.g., as the L2 norm) of the differences, per layer group, of (i) the latent variable or variables at the output of the layer group of the teacher neural network 210 and (ii) the latent variable or variables at the output of the corresponding layer group of the student neural network 205. The likelihood value may then be compared to a threshold, and, if any of the likelihood values exceed the threshold, the smallest rectangle that encloses all of the likelihood values exceeding the threshold may be designated as the suspicious area in the image. A suspicious area may be an area that is (at least initially) considered to potentially have a defect. The circuit or software, for performing these calculations based on the latent variables and output variables, may be considered to be part of the student teacher neural network.

The selecting, (at 110 in FIG. 1), of a defect-free reference image may be performed as follows. The defect-free reference images may be a subset of the normal images. Each of the defect-free reference images may be selected, from the set of normal images, as an image for which high confidence exists that it is entirely free of defects. The selection process may involve, for example, careful inspection of the image by a human operator, or correlation with a product having performance characteristics that are not deficient in any way.

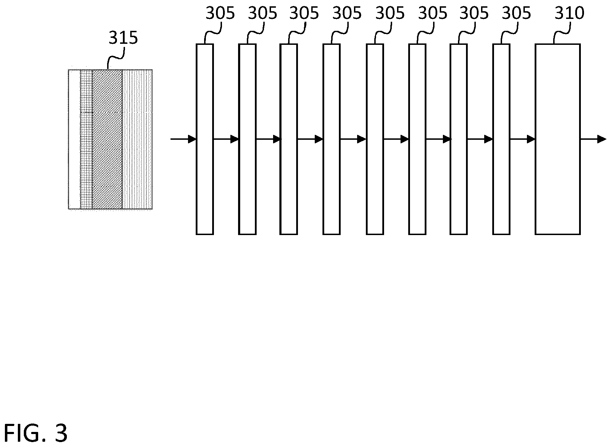

A classifying neural network, which may include a convolutional neural network and a classifying head, may be trained to perform the selection of a defect-free reference image corresponding to the product image. FIG. 3 shows an example of such a convolutional neural network, which includes a plurality of interconnected layers 305, each layer including a plurality of artificial neurons. The convolutional neural network may be a feature extractor (e.g. may form a backbone of the neural network), and may output a latent feature vector. The neural network may also include a classifying head 310. The classifying head 310 may receive as an input the latent feature vector from the convolutional neural network and output a classification of the image 315 that is input into the convolutional neural network (that corresponds to the latent feature vector). In operation, after the neural network has been trained and is performing inference operations, an image 315 may be fed into the input of the neural network, and the neural network may produce, at the output of the classifying head 310, a label identifying the category into which the image has been classified. The training of the convolutional neural network may be similar to the training of the teacher neural network 210. During training, the classifying neural network may be trained to perform image classification, using supervised training, with a set of generic images, each labeled with a respective classification. These generic images may be arbitrary everyday images, each labeled with a respective classifying label. The objective function used to train the classifying neural network may be one that rewards correct classification of an image.

During inference, the neural network may be fed with (i) the product image and with (ii) each of the defect-free reference images in turn, and the latent feature vector (at the output of the convolutional neural network, which is also the input to the classifying head, if present) corresponding to the product image is compared (e.g. using a similarity function) to each of the respective latent feature vectors corresponding to the defect-free reference images. A subset of the defect-free reference images (e.g., the n defect-free reference images that are most similar to the product image in the sense that for each one of them a norm (e.g., an L2 norm) of the difference between (i) the latent feature vector for the defect-free reference image and (ii) the latent feature vector for the product image is among the n smallest such differences) may then be selected for further processing. As the present embodiment makes use of the latent feature vectors output from the convolutional neural network, the head 310 need not be included in the neural network that is used to select the defect-free reference image(s). The present embodiment selects n defect-free reference images, where n is a natural number. n may be predefined.

In some embodiments the subset of the defect-free reference images is a subset for which a norm (e.g., an L2 norm) of the difference between (i) the latent feature vector for the defect-free reference image and (ii) the latent feature vector for the product image is less than a threshold. In some embodiments, the latent feature vector of each defect-free reference image is determined by a first inference operation (after training is completed and before characterization of product images is begun) and stored for use during characterization of product images, so that during characterization of product images it is not necessary to re-calculate the latent feature vector of each of the defect-free reference images; instead, for any product image, a latent feature vector is obtained from the convolutional neural network, and this feature vector is compared to all of the stored latent feature vectors for the defect-free reference image to determine which of the defect-free reference images are to be selected for further processing.

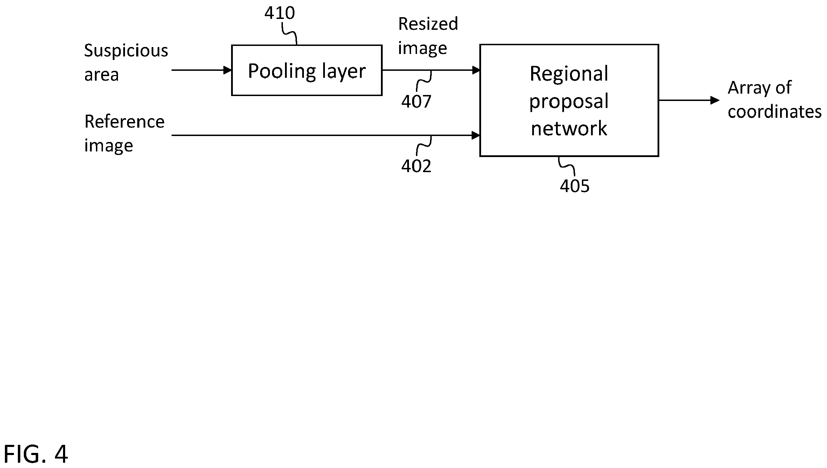

A reference region may then be identified, in each of the selected reference images. Referring to FIG. 4, during inference, the reference image may be fed into a first input 402 of a neural network referred to as a regional proposal network 405, along with, at a second input 407, a resized image corresponding to the suspicious area, and the regional proposal network 405 may produce an array of sets of coordinates, each set of coordinates including four numbers (e.g., a 4-tuple), including a first pair of numbers specifying the x and y coordinates of one corner of the (rectangular) reference region and a second pair of numbers specifying the x and y coordinates of the opposite corner of the (rectangular) reference region. The sets of coordinates may be produced in an ordered list, with the first 4-tuple corresponding to a reference region deemed by the regional proposal network 405 to be the region best matching the suspicious area, the second 4-tuple corresponding to a reference region deemed to be the second-best match, and so forth. A pooling layer 410 may resize (e.g., by down-sampling, extrapolation, or interpolation) the suspicious area to a standard size (e.g., 32 x 32 pixels), and the regional proposal network 405 may be configured to accept a suspicious area resized to the standard size.

The regional proposal network 405 may be trained using randomly selected rectangular subregions, or "cropped portions" of normal images. During each iteration, in training, a reference image may be fed to the first input 402 of the regional proposal network 405 and a randomly selected cropped portion may be fed into the second input 407. During training, an objective function may be used that rewards similarity between the (randomly chosen) 4-tuple used to perform the cropping and the first 4-tuple in the list of coordinates produced by the regional proposal network 405. For example, the objective function may be based on a list of coordinates, whose intersection-over-union (IoU) scores are larger than a threshold (each IoU score being a measure of the ratio of (i) the intersection (or overlap) of the area defined by the true coordinates and the area defined by the predicted coordinates to (ii) the union of the area defined by the true coordinates and the area defined by the predicted coordinates). These coordinates are used to calculate the cost or reward using the objective function. This process may be repeated for each of the selected reference images, so that for each of the selected reference images, the regional proposal network 405 will have identified a reference region best corresponding to the suspicious area.

Finally, a measure of similarity between the suspicious area and each of the reference regions may be determined. If the similarity between the suspicious area and at least one of the reference regions is sufficiently great, (e.g., if a measure of similarity between the suspicious area and the reference region exceeds a threshold), then the product may be deemed to be defect free, and it may be permitted to continue in the normal production flow. If the similarity between the suspicious area and each of the reference regions is too small (e.g., if a measure of similarity between the suspicious area and the reference region is less than the threshold for each of the reference regions), then the product may be deemed defective and removed from the manufacturing flow.

The measure of similarity may be generated using a method analogous to that used to identify reference images similar to the product image. For example, the neural network of FIG. 3, or an analogous convolutional neural network (trained, with a classification head, with generic images, and with an objective function that rewards correct classifications) may be used to generate a latent feature vector for the reference region and to generate a latent feature vector for the suspicious area, and a measure of the difference between the suspicious area and the reference region may be calculated as a norm (e.g., as the L2 norm) of the difference between the latent feature vector for the reference region and the latent feature vector for the suspicious area.

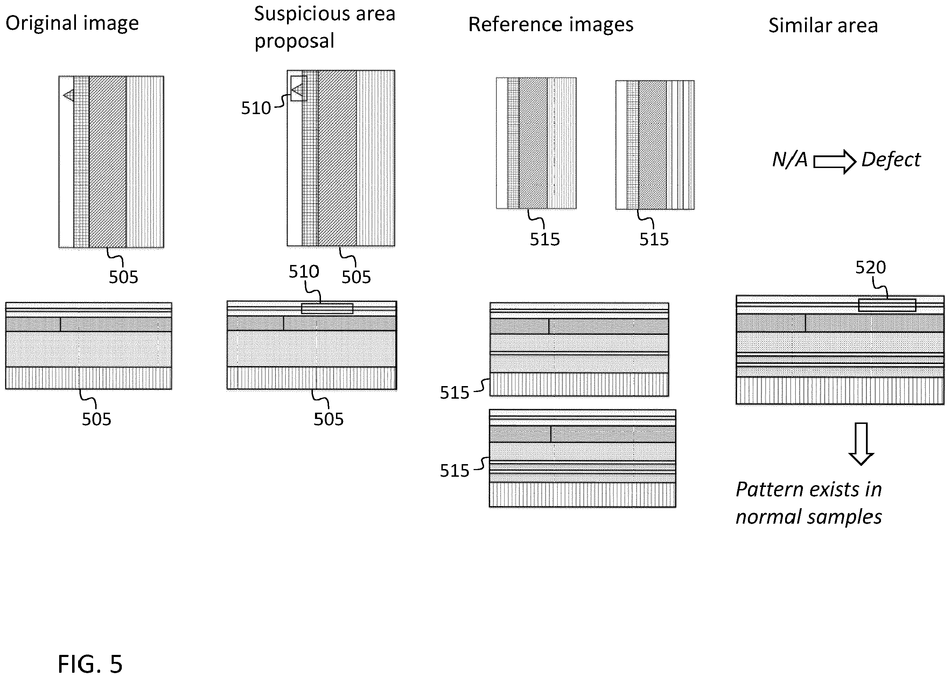

FIG. 5 shows the process flow, for a first product image 505 (in the upper portion of FIG. 5) and a second product image 505 (in the lower portion of FIG. 5). In each of the product images, a suspicious area 510 is identified, and the regional proposal network 405 finds a reference region (the most similar portion) in each of a pair of reference images 515. In the case of the first product image 505, a sufficiently similar reference region is not found ("N/A") and, as a result, the first product image 505 is deemed to be an image of a product containing a defect. In the case of the second product image 505, a sufficiently similar reference region 520 is found, and it is determined that normal samples contain a similar region, and the suspicious area 510 does not contain a defect.

As used herein, two neural networks are considered to be the same neural network if their structure is the same and their parameters (e.g., their weights) are the same. As such, if a first neural network is a set of neurons implemented on a first piece of hardware (e.g., a first processing circuit), the set of neurons being organized in a certain structure and configured (e.g., via training) with certain parameters, and if a second neural network is implemented on the same hardware and has the same structure and parameters as the first neural network, then the second neural network is the same neural network as the first neural network. If a third neural network is implemented on a separate and different piece of hardware and has the same structure and parameters as the first neural network, then the third neural network is the same neural network as the first neural network and the second neural network. As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, the term "or" should be interpreted as "and/or", such that, for example, "A or B" means any one of "A" or "B" or "A and B". As used herein, the term "rectangle" includes a square as a special case, i.e., a square is an example of a rectangle, and the term "rectangular" encompasses the adjective "square". As used herein, determining that a measure of difference between two quantities exceeds (or is less than) a threshold encompasses, as an equivalent operation, determining that a measure of similarity between the two quantities is less than (or exceeds) a threshold.

Each of the neural networks described herein may be implemented in a respective processing circuit or in a respective means for processing (or more than one neural network, or all of the neural networks described herein may be implemented together in a single processing circuit or in a single means for processing, or a single neural network may be implemented across a plurality of processing circuits or means for processing). Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, the term "array" refers to an ordered set of numbers regardless of how stored (e.g., whether stored in consecutive memory locations, or in a linked list).

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

Although embodiments of a system and method for defect detection have been specifically described and illustrated herein, many modifications and variations will be apparent to those skilled in the art. Accordingly, it is to be understood that a system and method for defect detection constructed according to principles of this disclosure may be embodied other than as specifically described herein. The invention is also defined in the following claims, and equivalents thereof.

## Claims

1. A computer-implemented method, comprising:
identifying, by a first neural network, a suspicious area in a first image;
selecting, from among a set of defect-free reference images, by a second neural network, a defect-free reference image corresponding to the first image;
identifying, by a third neural network, in the selected defect-free reference image, a reference region corresponding to the suspicious area; and
determining, by a fourth neural network, a measure of similarity between the suspicious area and the reference region.

2. The method of claim 1, wherein the first neural network is a student teacher neural network, comprising a student neural network and a teacher neural network.

3. The method of claim 2, further comprising one or both of:
training the teacher neural network with:
a set of generic images, each labeled with a classification; and
a first objective function that rewards correct classification of an image; and training the student neural network with:
a set of normal images, and
a second objective function that rewards similarity between latent variables of the student neural network and corresponding latent variables of the teacher neural network.

4. The method of claim 2 or claim 3, wherein the suspicious area is a region of the first image for which a measure of difference between a first set of latent variables of the student neural network and corresponding latent variables of the teacher neural network exceeds a threshold, the first set of latent variables and the corresponding latent variables of the teacher neural network corresponding to the interior of the suspicious area.

5. The method of any preceding claim, wherein the second neural network comprises a convolutional neural network.

6. The method of any preceding claim, further comprising training one or both of the second neural network and the fourth neural network with:
a set of generic images, each labeled with a classification; and
an objective function that rewards correct classification of an image.

7. The method of any preceding claim, wherein the selecting of a defect-free reference image comprises selecting the selected defect-free reference image for which a measure of the difference between the first image and the selected defect-free reference image is least.

8. The method of claim 7, wherein the measure of the difference is an L2 norm of the difference between:
latent features of the second neural network when an input of the second neural network is the first image, and
latent features of the second neural network when the input of the second neural network is the selected defect-free reference image.

9. The method of any preceding claim, wherein the identifying of the reference region comprises generating, by the third neural network, a plurality of sets of estimated coordinates, each estimated set of coordinates defining the coordinates of two opposing corners of the reference region.

10. The method of any preceding claim, further comprising training the third neural network with:
a plurality of cropped portions, each cropped portion being a portion of a normal image cropped based on a respective set of cropping coordinates; and
an objective function that rewards similarity of estimated coordinates and cropping coordinates.

11. The method of any preceding claim, wherein the determining of a measure of similarity between the suspicious area and the reference region comprises determining a measure of the difference between:
latent features of the fourth neural network when an input of the fourth neural network is the suspicious area, and
latent features of the fourth neural network when the input of the fourth neural network is the reference region.

12. The method of any preceding claim, wherein:
the first image is an image of an article in a manufacturing flow; and
the method further comprises:
determining that the measure of similarity indicates the presence of a defect; and
removing the article from the manufacturing flow.

13. The method of claim 12, wherein the article is a display panel.

14. The method of any preceding claim, wherein one of:
the first neural network,
the second neural network,
the third neural network, and
the fourth neural network,
is the same neural network as another one of:
the first neural network,
the second neural network,
the third neural network, and
the fourth neural network.

15. A system, comprising:
one or more processing circuits, the one or more processing circuits being configured to:
identify a suspicious area in a first image;
select, from among a set of defect-free reference images, a defect-free reference image corresponding to the first image;
identify, in the selected defect-free reference image, a reference region corresponding to the suspicious area; and
determine a measure of similarity between the suspicious area and the reference region.
